# EUROPÄISCHE PATENTSCHRIFT

(11) **EP 0 526 771 B1**
(45) Veröffentlichungstag und Bekanntmachung des Hinweises auf die Patenterteilung: **30.08.1995**
(21) Anmeldenummer: 92111901.2
(22) Anmeldetag: 13.07.1992
(51) Int. Cl.: A23G 1/14, A23G 1/16, B01D 1/22

(54) **Conche**
Conche
Conche

(30) Priorität: 02.08.1991 DE 4125629
(43) Veröffentlichungstag der Anmeldung: 10.02.1993
(73) Patentinhaber: BÜHLER AG, 9240 Uzwil (CH)
(72) Erfinder: Stadelmann, Max, CH-8599 Salmsach (CH); König, Hans-Joachim, W-4902 Bad Salzuflen 1 (DE)
(74) Vertreter: Révy von Belvárd, Peter

(56) Entgegenhaltungen:
- DE-A- 2 038 481
- DE-A- 3 300 299
- DE-A- 3 615 019
- DE-A- 3 626 732
- DE-B- 1 209 548

## Beschreibung

Die Erfindung betrifft eine Vorrichtung nach dem Oberbegriff des Anspruches 1.

Conchen können als Trockenconchen oder Flüssigconchen ausgeführt sein. Vorteilhaft sind Conchen, die sowohl als Trockenconchen als auch als Flüssigconchen betrieben werden können. Bei einer derartigen aus der DE-A 36 26 732 bekannten Conche sind Versalbungswerkzeuge mit schräg zur Trogwand verlaufenden Versalbungsflächen vorgesehen, die für die Trockenbearbeitung unter Umkehrung der Drehrichtung als Schaber wirken. Die Conchen können nur einen Rotor in einem ihm zugeordneten Trogabteil oder auch mehrere Rotoren in jeweils zugeordneten Trogabteilen aufweisen.

Geht man von einer Conche aus, die durch Änderung der Drehrichtung der Rotoren sowohl als Trockenconche wie auch als Flüssigconche betreibbar ist, so durchläuft die Schokoladenmasse zunächst eine pastös-trockene Phase, geht anschliessend in eine zäh-plastische Phase über, um dann in eine flüssige Phase zu wechseln. Bei einem derartigen Conchieren der Schokolademasse durch die mechanische Einwirkung der Rotoren wird eine Erwärmung und Belüftung erzielt. Hierbei tritt beispielsweise eine Verdampfung von organischen Säuren wie Essigsäure und auch eine erwünschte Oxydation von Geschmacksstoffen ein. Ferner wird auch ein Mischeffekt und eine Abrundung der Partikelchen erzielt.

Die zur Belüftung nötige Luft gelangt durch eine Öffnung an der Oberseite des Troges zur Schokoladenmasse. Durch diese Öffnung treten die verdampften Stoffe aus dem Trog aus. Nebst diesem gewünschten Austausch durch die Trogöffnung wird auch, aufgrund der mechanischen Anregung durch die Rotoren, Schokolademasse aus dem Trog geschleudert. Weil feine Schokolademassen bis zu 48 Stunden lang conchiert werden und dabei bei gleicher Rezeptur, gleichen Ausmahlungsgrades und gleicher Temperatur oftmals ganz unterschiedliche Viskosität besitzen, können zeitweise erhebliche Mengen aus dem Trog geworfen werden. Die anschliessende Reinigung der Conchen-Aussenteile ist dann sehr aufwendig. Zwar sind gegebenenfalls vertikale Lamellen im Bereich der Trogöffnung vorgesehen, doch sind diese Lamellen in manchen Fällen unbefriedigend, weil sie das Herausspritzen der Schokolademasse nur zum Teil verhindern und weil sie stark verschmutzen und manuell gereinigt werden müssen.

Der Erfindung liegt die Aufgabe zugrunde, eine Vorrichtung zum Conchieren anzugeben, die während des Conchierprozesses das Auswerfen von der im Trog befindlichen Schokolademasse verhindert und die Reinigungsarbeiten erleichtert, gegebenenfalls aber auch die Qualität der Schokolade verbessert. Die Aufgabe wird erfindungsgemäss durch die kennzeichnenden Merkmale des Anspruches 1 gelöst.

Es hat sich gezeigt, dass eine die Trogöffnung überdeckende Haube zweckmässig Zylinderform besitzt, vorzugsweise die Form eines Kreiszylindersegmentes hat. Diese Form ermöglicht den Einsatz eines einfachen mechanischen Reinigungssystems, bestehend aus einem Schaber, der, um die Zylinderachse drehend, an der Unterseite der Abdeckhaube dicht anliegt und aus einem Antrieb, welcher den Schaber bewegt. Dieser Antrieb ist bevorzugt ein hin- und hergehender Antrieb, wie er in der Fachliteratur, beispielsweise in der DE-A-1 209 548, beschrieben ist.

Zur Steuerung einer Hinundher-Bewegung sind zweckmässig im Bereich der seitlichen Berandung des zylindrischen Haubenteiles beidseits jeweils Endkontakte vorgesehen, z.B. mindestens je ein Read-Kontakt angebracht. Vorzugsweise löst der Schaber beim Passieren eines Kontaktes jeweils erst einen Abbremsvorgang und dann eine Richtungsumkehr des Schabers aus. Die Vorrichtungen für das Abbremsen und für die Richtungsumkehr sind der Antriebsart entsprechend in an sich bekannter Weise gewählt.

Wird der Schaber von einem Elektromotor angetrieben, so sind die Abbrems- und die Richtungsumkehrvorrichtung elektrische Schaltungen. Wird zum Bewegen des Schabers ein pneumatischer Schwenkantrieb verwendet, so steuert die Abbremsvorrichtung ein Druckreduktionsventil und die Umkehrvorrichtung die Steuerventile des Schwenkantriebs.

Die Lagerung des Schabers wird vereinfacht, wenn die Merkmale des Anspruches 4 vorgesehen sind. Dabei braucht die Rotationsfläche der Abdeckhaube nicht unbedingt ein Kreiszylinder zu sein, da ja mit Hilfe einer Nockensteuerung (etwa ähnlich, wie sie bereits für die Scheibenwischer von Kraftwagen vorgeschlagen worden ist) eine von dieser Form abweichende Zylinderform (im allgemeinsten Sinne) erzielbar ist. Zweifellos wird die Konstruktion bei Verwendung eines Kreiszylinders jedoch weiter vereinfacht.

An sich wäre es denkbar, die Reinigungsvorrichtung innerhalb der Abdeckhaube um eine Drehachse rotieren zu lassen. Dies bedingte aber eine entsprechend grosse Bauhöhe der Abdeckhaube, zumal die Reinigungsvorrichtung ja nur im oberen Bereich ihrer Bewegung ihre Funktion an der Innenfläche der Abdeckhaube ausführt. Es ist daher bevorzugt, wenn die Merkmale des Anspruches 5 vorgesehen sind.

Um den Zutritt von zur Belüftung der Schokolademasse nötiger Frischluft in genügendem Umfang zu ermöglichen, befindet sich in der Abdeckhaube mindestens eine, vorzugsweise aber mindestens zwei Luftdurchtrittsöffnungen. Da beim Conchieren eine Verdampfung von organischen Säuren wie Essigsäure und auch eine erwünschte Oxydation von Geschmacksstoffen erfolgt, ist es besonders wichtig, eine Luftzirkulation ohne Kurzschluss zu erwirken, sodass die entstehende Abluft vollständig und in kurzer Zeit nach dem Entstehen aus dem von der Abdeckhaube abgeschlossenen Raum abgeführt und durch Frischluft ersetzt wird. Eine erfindungsgemässe Ausführungsform sieht eine Luft-Zwangsförderung mit mindestens einem Gebläse zur Erzeugung eines Unter- und/oder eines Überdruckes vor. Diese Zwangsförderung ist dann besonders effizient, wenn die Luftzufuhr- und die Abluftöffnung richtig plaziert sind.

Die Abluftöffnung sollte wegen der Gefahr des Ansaugens von Schokolademasse nicht im Bereich der vom Schaber überstrichen wird, liegen. Somit kommt die Abluftöffnung vorzugsweise in eine der beiden Endflächen in Längsrichtung oder gegebenenfalls in einen der seitlichen Randbereiche der Abdeckhaube zu liegen. Die Luftzufuhröffnung soll bezüglich des Zirkulationsverlaufes so weit wie möglich von der Abluftöffnung entfernt sein. Die optimale Lage der Luftdurchtrittsöffnungen hängt ebenfalls von den Ein- und Austrittsströmungsgeschwindigkeiten ab.

Die Abdeckung ergibt gemäss den obigen Ausführungen einen Abschluss der Bearbeitungskammer bzw. des Trograumes. Dabei wurde bereits erwähnt, dass Luft aus diesem Raum gesaugt werden kann. Bei den Versuchen hat sich nun in überraschender Weise herausgestellt, dass sich mit einem solchen teilweisen oder vollständigen Vakuum die Qualität der Schokolade deutlich verbessern lässt. Zum Erreichen diesen Effektes ist aber die Reinigungsvorrichtung nicht unbedingt erforderlich, vielmehr sind sie auf die Merkmale des Anspruches 10 zurückzuführen.

Weitere Merkmale der Erfindung ergeben sich aus der nachfolgenden Beschreibung und den Zeichnungen,in denen Ausführungsbeispiele dargestellt sind. Es zeigen:
- Fig. 1: eine Darstellung einer Conche und ein Schema einer Schabersteuerung;
- Fig. 2: eine weitere Ausführungsform einer Conche; und
- Fig. 3: eine Variante zu dem in Fig. 1 gezeigten Schaberantrieb.

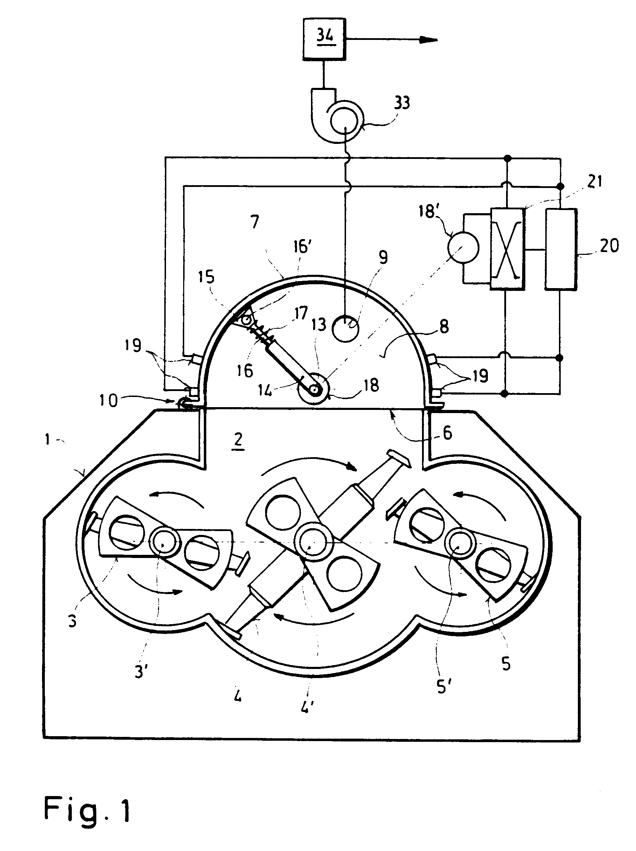

Eine Conche 1 gemäss Fig. 1 beinhaltet einen einen Trograum umschliessenden Trog 2 sowie Rotoren 3,4,5, die in entsprechenden Trogabteilen von Achsen 3',4',5' rotatorisch angetrieben werden. Obwohl das Ausführungsbeispiel eine Drei-Wellen-Conche zeigt, wäre eine beliebige andere Rotorenzahl, wie beispielsweise eins oder zwei, auch möglich. Eine obenliegende Öffnung 6 des Troges 2 wird von einer vorzugsweise zylindersegmentförmigen Abdeckhaube 7 überdeckt, die beidseits in Achsenrichtung mittels vorzugsweise senkrecht auf der Achse stehenden Endflächen 8 abgeschlossen ist. In den Endflächen 8 und gegebenenfalls in den seitlichen Randbereichen der zylinderförmigen Fläche der Haube 7 sind Öffnungen 9 vorgesehen (nur eine ist an dieser Seite der Abdeckhaube sichtbar), die zum Zuführen von Frischluft und zum Abführen der beim Conchieren entstehenden Brüden dienen.

Eine erfindungsgemässe Ausführungsform sieht zum Entfernen der Brüden eine Absaugvorrichtung in Form eines Gebläses 33 vor, die gegebenenfalls durch eine Reinigungsanlage 34, beispielsweise zur katalytischen Reinigung der Abluft aus dem von der Conche umschlossenen Behandlungsraum, ergänzt ist. Es hat sich gezeigt, dass auf diese Weise gewünschtenfalls ein Vakuum bzw. ein Unterdruck innerhalb des Trograumes erzielbar ist, soferne die Abdeckhaube 7 relativ dicht sitzt. Obwohl Fachleute bisher immer von der Notwendigkeit des Luftzutrittes in Conchen gesprochen haben, hat es sich in überraschender Weise gezeigt, dass sich eine derartige Vakuumbehandlung innerhalb einer, an sich während des Grossteiles der Betriebszeit ohne Wärmezufuhr auskommenden Conche¨ sich äusserst geschmacksverbessernd auswirken kann. Dieser Vorteil ergibt sich natürlich auch unabhängig davon, ob eine Abdeckhaube vorgesehen ist oder nicht, so dass diese Ausführung von selbständiger erfinderischer Bedeutung ist.

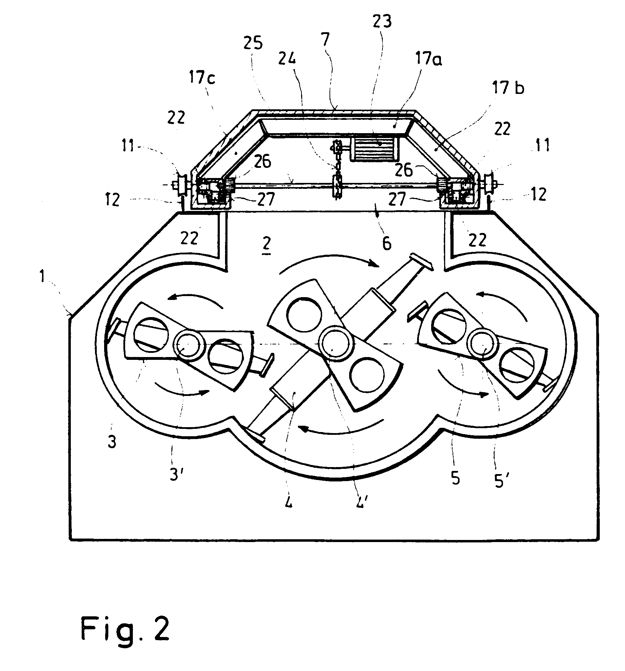

Die Haube 7 kann beispielsweise mittels mindestens zweier Drehgelenke 10, die eine Seite der Haube 7 mit dem Gehäuse der Conche 1 verbinden, seitlich aufgeklappt werden, sodass die Öffnung 6 von oben zugänglich ist. Eine weitere erfindungsgemässe Öffnungsvorrichtung besteht gemäss Fig. 2 aus Rollen 11, von denen mindestens je zwei an zwei parallelen Aussenseiten der Haube 7 angebracht sind, und aus zwei den Rollen entsprechenden am Trogrand montierten Schienen 12. Die Haube 7 kann auf den Schienen 12 soweit verschoben werden, bis ein genügend grosser Bereich der Öffnung 6 freigelegt ist.

Im Zentrum des Zylindersegmentes befindet sich eine Achse 13, die beidseits in den Endflächen 8 gelagert ist. Mindestens zwei Verbindungsstangen 14 führen radial von der Achse 13 weg zu einem Schaber 15. Der Schaber 15 wird vorzugsweise mit einem Führungsstift 16 und einer daran anschliessenden Anpressvorrichtung, beispielsweise einer Feder 17 am radial äusseren Ende der Verbindungsstangen 14 gehalten und an die Unterseite der Haube 7 angedrückt. Zweckmässig ist er um eine Achse 16' drehbeweglich, um sich der Oberfläche der Haube 7 anpassen zu können, insb. wenn diese von einer Kreiszylinderform abweicht. Die beiden an der Haube 7 anliegenden Kanten des Schabers 15 lösen beim Vorbeigehen des Schabers 15 die an der Unterseite der Haube 7 klebenden Schokolademassen, welche nach dem Lösen wieder in den Trog fallen.

Ein Antrieb 18 mit einem Motor 18' bewegt den Schaber 15 entlang der Hauben-Unterseite in beiden Richtungen bis an die seitlichen Berandungen dieser Unterseite. Zur Erzeugung der Hinundher-Bewegung sind im Bereich der beiden seitlichen Berandungen mindestens je ein, vorzugsweise aber je zwei Read-Kontakte 19 vorgesehen, welche über eine Geschwindigkeitsschaltung 20 und eine Drehrichtungs-Umkehrschaltung 21 den Antrieb steuern. Als Antrieb kann ausser dem Elektromotor 18' auch ein pneumatischer Schwenkantrieb vorgesehen sein.

Eine weitere erfindungsgemässe Ausführungsform gemäss Fig.2 sieht eine Abdeckhaube 7 vor, die entlang eines Teils ihrer Längsachse ein gleichbleibendes Querprofil mit vorzugsweise drei geraden Abschnitten aufweist. Die Reinigungsvorrichtung besteht aus einem Schaberwagen, dessen drei Schaber 17 a,b,c formschlüssig an die Unterseite der Haube 7 anschliessen und der vertikal sowie seitlich mittels Rollen 22 an mindestens drei nicht auf einer Geraden liegenden Stellen - vorzugsweise aber beidseits an je zwei Stellen - in den seitlichen Randbereichen der Abdeckhaube 7 geführt wird. Der Schaberwagen wird von einem Elektromotor 23, gegebenenfalls von einem Linearmotor, hin und her bewegt. Der Elektromotor 23 treibt über eine Kette 24 eine Stange 25 an, die beidseits im Schaberwagen gelagert ist. Zwei Zahnräder 26, die an der Stange 25 befestigt sind, liegen je in einer Zahnstange 27 die an zwei parallelen unteren inneren Rändern der Haube 7 befestigt sind. In den beiden Endbereichen der Abdeckhaube in Längsrichtung sind mindestens je ein, vorzugsweise aber je zwei End-Kontakte vorgesehen, welche über eine Geschwindigkeitsschaltung und eine Richtungs-Umkehrschaltung zur Steuerung des Antriebes dienen, derart, dass der Schaberwagen eine periodische Hinundher-Bewegung entlang der Längsrichtung der Abdeckhaube 7 ausführt.

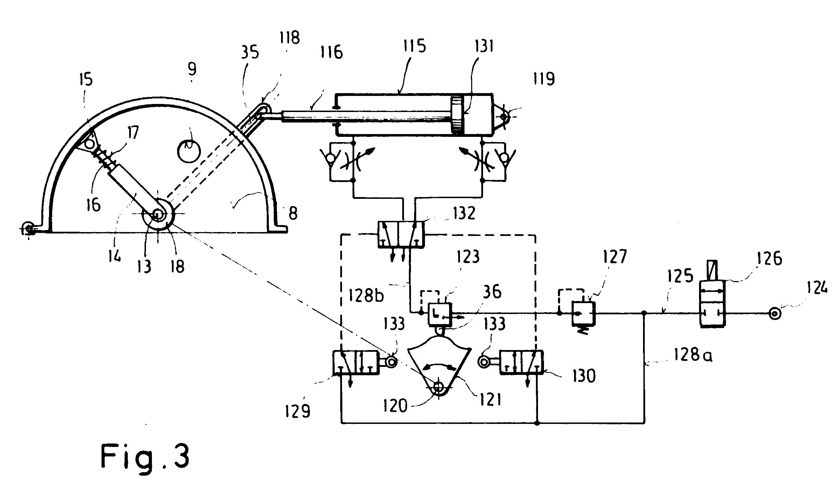

Wie in einer Antriebsvariante gemäss Fig. 3 gezeigt ist, ist als Schwenkantrieb eine Kolben-Zylinder-Einheit 115 vorgesehen, die an sich mit einem beliebigen Antriebsfluid betreibbar ist. Im Prinzip wäre auch ein drehender Fluidmotor verwendbar, doch eignet sich der gezeigte fluidische Antrieb besser. Mit einer derartigen Kolben-Zylinder-Einheit sind nämlich relativ grosse Stellwege bei relativ grossen Kräften zu erzielen. Zum Ausgleich der sich bei der Schwenkbewegung ergebenden Differenzwinkel kann der Zylinder des Schwenkantriebs 115 um eine lotrechte Achse 119 verschwenkbar festgelegt sein, doch mag es auch genügen, in einem mit der Welle 18 fest verbundenen Antriebshebel 118 einen Längsschlitz 35 vorzusehen.

Aufgrund der Kreisbahn des Schabers 15 ergeben sich bei seiner Bewegungsumkehr an den Enden der Bahn Unregelmässigkeiten hinsichtlich seiner Geschwindigkeit entsprechend einem Sinusverlauf. Bei kleinen Schwenkwinkeln sind diese Abweichungen von der Linearität vernachlässigbar. Vorteilhaft ist jedoch vorgesehen, den Schwenkantrieb zu linearisieren. Hierzu kann eine mitschwenkende Nockenscheibe 121 vorgesehen werden, die mit einem Nockenfolger 36 zusammenwirkt, um ein Steuerventil 123 zu betätigen. Die Form der Nockenscheibe 121 ist derart vorgesehen, dass die durch die Schwenkbewegung sich ergebenden Ungleichmässigkeiten ausgeglichen werden, d.h dass die Bewegung des Schabers 15 in den Randzonen etwas beschleunigt und in den mittleren Zonen etwas verlangsamt wird, indem zur Beschleunigung der Bewegung der Durchflussquerschnitt des genannten Steuerventils 123 vergrössert bzw. zur Verlangsamung der Bewegung verkleinert wird.

Die steuerungstechnische Beschaltung der Kolben-Zylinder-Einheit 115 weist gemäss Fig. 3 eine Druckquelle 124 (hydraulisch oder pneumatisch) auf. In einer Speiseleitung 125 ist ein Schaltventil 126 zum Ein- bzw. Ausschalten der Vorrichtung vorgesehen. Die Speiseleitung 125 verzweigt sich in einen Schaltkreis 128a und einen Antriebskreis 128b. Im Antriebskreis 128b ist zunächst ein Druckreduzierventil 127 angeordnet. Ferner ist in dem Antriebskreis 128b das Steuerventil 123 angeordnet, dessen Durchflussquerschnitt, wie vorstehend beschrieben, von der Nockenscheibe 21 in Abhängigkeit der Schwenklage des Schabers 15 verändert wird. Über ein Hauptventil 132 ist der Stellkolben 131 der Kolben-Zylinder-Einheit 115 von der einen oder anderen Seite her druckbeaufschlagbar. Das Hauptventil 132 dient der Bewegungsumkehr und ist über Pilotventile 129 und 130 gesteuert, die durch Umschalten des Hauptventils 132 die Bewegungsumkehr der Kolbenstange 116 einleiten. Dabei ist das Hauptventil 132 vorzugsweise bistabil ausgebildet.

Die Pilotventile 129 und 130 weisen Schaltfortsätze 133 auf, die in den jeweiligen Endlagen der Nockenscheibe 121 betätigt werden, wodurch das Hauptventil 132 hydraulisch oder pneumatisch in die eine oder andere stabile Schaltstellung umgeschaltet wird. Das dynamische Verhalten der Kolbenstange 116 zwischen den beiden Umschaltpunkten zur Bewegungsumkehr ist einzig und allein durch das Steuerventil 123 bzw. von dessen durch die Form der Nockenscheibe gesteuerten Durchflussguerschnitt bestimmt.

Die Umschaltung des Hauptventils zur Einleitung der Bewegungsumkehr kann auch auf elektromechanischem Wege erfolgen, wobei dann die Pilotventile 129 und 130 durch entsprechende Sehalteinrichtungen wie Endschalter od.dgl. (entsprechend den Endschaltern 19) zu ersetzen wären.

Es versteht sich, dass im Rahmen der Erfindung zahlreiche Modifikationen möglich sind; beispielsweise können an Stelle von Schabern drehende Reinigungselemente, die beispielsweise bürstenartig mit über die Innenfläche streichenden Lappen versehen sind, vorgesehen werden.

## Patentansprüche

1. Conche (1) zum Verreiben und Verspachteln von Schokoladenmassen mit einem einen Trograum umschliessenden Trog (2), in dem wenigstens ein Rotor (3,4,5) mit Versalbungswerkzeugen umläuft und mit einer oberseitigen Öffnung (6), dadurch gekennzeichnet, dass über der Öffnung (6) eine mobile Abdeckung (7), wie eine Abdeckhaube, mit einer Reinigungsvorrichtung (15,17) für ihre Unterseite so vorgesehen ist, dass die Öffnung (6) zur Erleichterung von Reinigungsarbeiten von oben zugänglich und im Betriebszustand zumindest teilweise abgedeckt ist.

2. Conche nach Anspruch 1, dadurch gekennzeichnet, dass die Reinigungsvorrichtung einen an der Innenfläche der Abdeckhaube (7) anliegenden Schaber (13-18) aufweist, der mit Hilfe einer Betätigungseinrichtung (18, 18') über die Innenfläche bewegbar ist, und dass die Betätigungseinrichtung (18, 18') vorzugsweise einen durch einen Energieträger treibbaren Antrieb (18') umfasst.

3. Conche nach Anspruch 2, dadurch gekennzeichnet, dass als Antrieb (18) ein Elektromotor (18') oder ein fluidischer, insbesondere pneumatischer, Schwenkantrieb vorgesehen ist.

4. Conche nach Anspruch 2, oder 3, dadurch gekennzeichnet, dass, die Abdeckhaube (7) zumindest teilweise die Form eines Zylinders, insbesondere eines Kreiszylindersegmentes, hat und dass der Schaber (17) um eine Achse (13) drehbar gelagert ist, deren Mittelpunkt vorzugsweise mit dem des Kreiszylinders zusammenfällt.

5. Conche nach einem der vorangehenden Ansprüche, dadurch gekennzeichnet, dass im Bereich der beiden seitlichen Berandungen der Abdeckhaube (7) mindestens je ein, vorzugsweise aber je zwei, Endschalter, insbesondere Read-Kontakte (19), vorgesehen sind, welche, gegebenenfalls über eine Geschwindigkeitsschaltung (20), mit einer Drehrichtungs-Umkehrschaltung (21) zur Steuerung des Antriebes (18) zu einer periodischen Hinundher-Bewegung verbunden sind.

6. Conche nach einem der vorangehenden Ansprüche, dadurch gekennzeichnet, dass mindestens eine, vorzugsweise aber mindestens zwei Luftdurchtrittsöffnungen (9) in der Abdeckhaube (7) vorgesehen sind.

7. Conche nach Anspruch 6, dadurch gekennzeichnet, dass durch die Luftdurchtrittsöffnungen (9) eine Luft-Zwangsförderung mit mindestens einem Gebläse zur Erzeugung eines Unter- und/oder eines Überdruckes vorgesehen ist, und dass die Abluft gegebenenfalls durch eine Abluft-Reinigungsanlage geführt ist.

8. Conche nach einem der vorangehenden Ansprüche, dadurch gekennzeichnet, dass und die Abdeckhaube (7) aus einer Abdecklage in eine Offenstellung bringbar ist, in welch letzterer die oberseitige Öffnung (6) des Troges (7) zumindest mehrheitlich frei ist.

9. Conche nach Anspruch 8, dadurch gekennzeichnet, dass zum Öffnen und Schliessen der Abdeckhaube (7) Führungseinrichtungen für dieselbe vorgesehen sind, insbesondere auf einer Seite des Trograndes Scharniere (10), oder an zwei parallelen Seiten des Trograndes Schienen (12) und an der Abdeckhaube (7) auf diesen Schienen (12) ablaufende Rollen (11).

10. Conche (1) zum Verreiben und Verspachteln von Schokoladenmassen mit einem einen Trograum umschliessenden Trog (2), in dem wenigstens ein Rotor (3,4,5) mit Versalbungswerkzeugen umläuft, nach einem der vorhergehenden Ansprüche, dadurch gekennzeichnet, dass über dem Trog (2) eine Abdeckwand (7) vorgesehen ist, und dass mit dem Trograum eine Absaugöffnung (9) zum Erzeugen eines Unterdruckes bzw. Vakuums vorgesehen ist.

## Claims

1. Conche (1) for working chocolate mass by rubbing and spreading, with a trough (2) enclosing a trough chamber in which at least one rotor (3,4,5) with smearing tools rotates and which has an opening (6) at the top, characterised in that a movable cover (7), such as a covering hood, having a cleaning arrangement (15,17) for its under side, is so provided above the opening (6) that the opening (6) is accessible from above to facilitate cleaning operations and is at least partly covered in the operating state.

2. Conche according to claims 1, characterised in that the cleaning arrangement has a scraper (13-18) abutting the inner surface of the covering hood (7) which is movable along the inner surface by means of an actuating device (18,18') and that the actuating device (18,18') preferably includes a power driven drive (18') which can be driven by a power carrier.

3. Conche according to claim 2, characterised in that the drive (18) is provided as an electric motor (18') or as a fluidic, particularly pneumatic, part turn drive.

4. Conche according to claim 2 or 3, characterised in that the covering hood (7) is at least in part of cylindrical form, particularly a segment of a regular cylinder, and that the scraper (17) is mounted rotatably about an axis (13) whose centre preferably coincides with that of the regular cylinder.

5. Conche according to one of the preceding claims, characterised in that in the region of each of the two lateral edges of the covering hood (7) at least one but preferably two limit switches, particularly Read-contacts (19), are provided and connected, if appropriate by way of a speed control circuit (20), to a rotation reversing circuit (21) to control the drive (18) for periodic to and fro movement.

6. Conche according to one of the preceding claims, characterised in that at least one, but preferably at least two air flow apertures (9) are provided in the covering hood (7).

7. Conche according to claim 6, characterised in that forced air ventilation is provided through the air flow apertures (9) having at least one fan to produce under pressure and/or over pressure and that the exhaust air is if appropriate guided through an exhaust air cleaning installation.

8. Conche according to one of the preceding claims, characterised in that and [sic] the covering hood (7) can be brought from a covering condition to an open position, in which latter the top opening (6) of the trough (7) is at least largely clear.

9. Conche according to claim 8, characterised in that guide devices are provided for opening and closing the covering hood (7), particularly hinges (10) on one side of the edge of the trough, or tracks (12) on two parallel sides of the edge of the trough and rollers (11) on the covering hood (7) running on these tracks (12).

10. Conche (1) for working chocolate mass by rubbing and spreading, with a trough (2) enclosing a trough chamber in which at least one rotor (3,4,5) with smearing tools rotates, according to one of the preceding claims, characterised in that a covering wall (7) is provided above the trough (2) and that the trough chamber is provided with a suction aperture (9) to produce under pressure or vacuum.

## Revendications

1. Conche (1) pour triturer et spatuler des masses de chocolat, avec une cuve (2), entourant une enceinte de cuve, dans laquelle au moins un rotor (3, 4, 5) tourne avec des outils de brassage et avec une ouverture (6) en face supérieure, caractérisée en ce qu'un recouvrement (7) mobile, tel qu'un capot de recouvrement, avec un dispositif de nettoyage (15, 17) pour sa face inférieure est prévu sur l'ouverture (6), de manière que l'ouverture (6) soit accessible depuis le dessus pour faciliter les travaux de nettoyage et soit au moins partiellement recouverte en état de fonctionnement.

2. Conche selon la revendication 1, caractérisée en ce que le dispositif de nettoyage présente un racleur (13 à 18) appuyant sur la surface intérieure du capot de recouvrement (7) et déplaçable, à l'aide d'un dispositif d'actionnement (18, 18'), sur la surface intérieure, et en ce que le dispositif d'actionnement (18, 18') comprend de préférence un entraînement (18') pouvant être actionné par un support d'énergie.

3. Conche selon la revendication 2, caractérisée en ce qu'est prévu comme entraînement (18) un moteur électrique (18') ou bien un entraînement pivotant fluidique, en particulier pneumatique.

4. Conche selon la revendication 2 ou 3, caractérisée en ce que le capot de recouvrement (7) a au moins partiellement la forme d'un cylindre, en particulier d'un segment de cylindre circulaire, et en ce que le racleur (17) est monté de façon à pouvoir tourner autour d'un axe (13) dont le centre coïncide de préférence avec celui du cylindre circulaire.

5. Conche selon l'une des revendications précédentes, caractérisée en ce que, dans la zone des deux bords latéraux du capot de recouvrement (7), sont prévus au moins pour chacun, mais de préférence pour les deux, des interrupteurs de fin de course, en particulier des contacts Reed (19), qui le cas échéant sont reliés par un circuit de vitesse (20), un circuit d'inversion de sens de rotation (21), pour assurer la commande de l'entraînement (18) et produire un mouvement de va-et-vient périodique.

6. Conche selon l'une des revendications précédentes, caractérisée en ce qu'au moins une, de préférence cependant au moins deux, ouvertures de passage d'air (9) sont prévues sur le capot de recouvrement (7).

7. Conche selon la revendication 6, caractérisée en ce que par les ouvertures de passage d'air (9) est prévu au moins un transfert forcé d'air, avec au moins une soufflante pour produire une dépression et/ou une surpression, et en ce que l'air d'évacuation est guidé le cas échéant par une installation d'épuration d'air d'évacuation.

8. Conche selon l'une des revendications précédentes, caractérisée en ce que le capot de recouvrement (7) peut être placé d'une position de recouvrement à une position d'ouverture dans laquelle ce dernier dégage au moins en plusieurs fois l'ouverture (6) de face supérieure de la cuve (7).

9. Conche selon la revendication 8, caractérisée en ce que des dispositifs de guidage sont prévus pour le capot de recouvrement (7), pour assurer son ouverture et sa fermeture, en particulier, d'un côté du bord de cuve, des charnières (10) ou, des deux côtés parallèles du bord de cuve, des glissières (12) et, sur le capot de recouvrement (7), des galets (11) défilant sur ces glissières (12).

10. Conche (1) pour triturer et spatuler des masses de chocolat avec une cuve (2), entourant une enceinte de cuve, dans laquelle au moins un rotor (3, 4, 5) tourne avec des outils de brasage, selon l'une des revendications précédentes, caractérisée en ce qu'est prévue sur la cuve (2) une paroi de recouvrement (7) et en ce qu'une ouverture d'aspiration (9) est prévue pour produire une dépression, respectivement un vide.
